# EUROPÄISCHE PATENTSCHRIFT

(11) **EP 1 245 296 B1**
(45) Veröffentlichungstag und Bekanntmachung des Hinweises auf die Patenterteilung: **30.06.2004**
(21) Anmeldenummer: 02007053.8
(22) Anmeldetag: 27.03.2002
(51) Int. Cl.: B05B 13/02

(54) **Beschichtungsanlage mit einer Zerstäuberwechselstation**
Coating installation with sprayhead changing station
Installation de revêtement avec une station de changer la tête de pulvérisation

(30) Priorität: 29.03.2001 DE 10115470
(43) Veröffentlichungstag der Anmeldung: 02.10.2002
(73) Patentinhaber: Dürr Systems GmbH, 70435 Stuttgart (DE)
(72) Erfinder: Nolte, Hans-Jürgen, Dr., 70565 Stuttgart (DE); Krumma, Harry, 74357 Bönningheim (DE); Herre, Frank, 71739 Oberriexingen (DE); Baumann, Michael, 74223 Flein (DE); Giuliano, Stefano, 70839 Gerlingen (DE); Melcher, Rainer, 71720 Oberstenfeld (DE); Haas, Jürgen, 75438 Knittlingen (DE); Schwarzwälder, Mathias, 71088 Holzgerlingen (DE); Hezel, Thomas, 71679 Asperg (DE); Maxharraj, Bekim, 74321 Bietigheim-Bissingen (DE)
(74) Vertreter: Heusler, Wolfgang, Dipl.-Ing.

(56) Entgegenhaltungen:
- EP-A- 1 057 540
- DE-A- 10 036 741
- US-A- 4 706 372
- US-A- 4 944 459
- US-A- 5 300 006

## Beschreibung

Die Erfindung betrifft eine Beschichtungsanlage und ein Verfahren nach dem Oberbegriff der unabhängigen Patentansprüche. Insbesondere handelt es sich um eine Anlage für die Beschichtung von Werkstücken wie Fahrzeugkarossen mit einem oder mehr Lackierrobotern mit auswechselbaren Zerstäubern in einer Sprühkabine.

Es ist bekannt, auswechselbar an Lackierrobotern montierbare Zerstäuber in einer Reihe im Innenraum der Lackierkabine anzuordnen, wo sie von den Robotern nach Bedarf abgeholt werden können. Dieser Vorgang erfordert relativ viel Zeit. Entsprechendes gilt für die erforderliche Versorgung und Reinigung der Zerstäuber in der Wechselstation. Im übrigen haben bisher bekannte Wechselanordnungen unerwünscht hohen Platzbedarf.

Die auswechselbaren Zerstäuber können zweckmäßig mit Beschichtungsmaterial unterschiedlicher Farbe gefüllte Vorratsbehälter enthalten.

Aus der US-A-4 944 459 ist eine Beschichtungsanlage für die Serienbeschichtung insbesondere von Fahrzeugkarossen bekannt, in der in einer Wechselstation mehrere Zerstäuber an jeweiligen von einem Lackierroboter anfahrbaren Ablageplätzen zur Verfügung gestellt werden. Die Zerstäuber sind über je einen Schlauch mit einer Farbwechselventilanordnung verbunden, an die Behälter für unterschiedliche wählbare Farben sowie ein weiterer Behälter für Verdünner angeschlossen sind. Die Zerstäuber werden von dem Roboter zum Lackieren den Ablageplätzen entnommen und nach Gebrauch dorthin zurückgebracht und bleiben hierbei ständig über ihren Schlauch mit dem Farbwechsler verbunden. Der Schlauch behindert die Beweglichkeit des Lackierroboters und hat den Nachteil hoher Materialverluste beim Farbwechsel.

Aus der US-A-5 300 006 ist ferner eine Werkzeugmaschine mit mehreren wählbaren Werkzeugen bekannt, die an konzentrisch um eine Mittelachse verteilten Ablageplätzen eines drehbaren Werkzeugmagazins verteilt angeordnet sind.

Aufgabe der Erfindung ist, die Nachteile der bekannten Beschichtungsanlage zu vermeiden und mit einem möglichst platzsparenden Wechselsystem ein schnelles Auswechseln der Zerstäuber gegen einen anderen Zerstäuber oder bei Bedarf auch gegen ein Werkzeug wie beispielsweise ein Messgerät oder Greifwerkzeug usw. zu ermöglichen.

Diese Aufgabe wird durch die Merkmale der Patentansprüche gelöst.

Durch die hier beschriebene Rondellform wird eine sehr kompakte, platzsparende und insbesondere bei Drehbarkeit schnell und einfach zugreifbare Wechselstation geschaffen, die nicht nur für die zu wechselnden Zerstäuber, sondern auch für sonstige während des Beschichtungsbetriebes von einem Roboter benötigte Geräte oder Werkzeuge zur Verfügung steht. Bei der Drehbewegung kann es sich um eine vollständige (karussellartige) Rotation oder um einfaches Verschwenken handeln.

Vorteilhaft ist ferner, dass die Zerstäuber in der Wechselstation einfacher als bisher an Versorgungsleitungen für Beschichtungsmaterial und an gemeinsame Leitungssysteme für Reinigungsmedien, Druckluft usw. angeschlossen werden können.

Ferner ermöglicht es ein in der Wechselstation vorgesehenes I-dentifikationssystem für die Zerstäuber in dem Rondell auf besonders einfache Weise, die für die Instandhaltung relevanten Zerstäuberdaten auszulesen und den Zerstäubertyp dem Ablageplatz zuzuordnen. Zu den benötigten Zerstäuberdaten gehören Informationen wie Betriebsstunden; Auflistung der Lackierzone, Lackierlinie, Lackart usw., in der der Zerstäuber eingesetzt wurde; Auflistung der Lackiermenge (Literleistung bzw. Standby-Betrieb); ausgeführte Wartungsarbeiten; ausgeführte Reinigungsarbeiten. Aus den Zerstäuberdaten können beispielsweise Wartungshinweise gewonnen werden.

Die automatisch bewegbare, beispielsweise als Rondell dienende Halterung kann vorteilhaft auch innerhalb der Kabine verfahrbar sein, insbesondere linear parallel zur Förderrichtung der zu beschichtenden Werkstücke und somit zu der ihr entsprechenden 7. Achse des Roboters, so dass der benötigte Zerstäuber beispielsweise dem Roboter zur Zeiteinsparung entgegenfahren kann.

Eine besonders wichtige Möglichkeit besteht darin, die die Ablageplätze enthaltende Vorrichtung, also ggf. das Rondell an der Kabinenwand oder vorzugsweise als Teil dieser Wand so anzuordnen, dass sie schnell einerseits vom Inneren der Kabine aus und andererseits von außen her zugänglich ist. Von innen her können die Zerstäuber oder Werkzeuge von einem Roboter abgeholt und eingesetzt werden, während von außerhalb beispielsweise manuelles Wechseln möglich ist.

Die beispielsweise rondellartige Ablagevorrichtung kann besonders vorteilhaft so angeordnet sein, dass die gemeinsame Mitte der Ablageplätze, also ggf. die Rondellachse, in der Ebene der Kabinenwand liegt, die Kabinenwandebene also durch die Mitte der Ablagevorrichtung verläuft.

Zur Abdeckung der Ablagevorrichtung besteht u.a. die Möglichkeit, den außen liegenden Teil der Vorrichtung in einem Anbau z.B. mit einer Tür anzuordnen, die nur bei Bedarf etwa zum Wechsel eines Zerstäubers oder sonstiger Werkzeuge geöffnet wird. Auch der für den Roboter im Kabineninnenraum zugängliche Teil kann mit einer geschlossenen Verkleidung mit einem Zugang für den Roboter versehen sein, der bei Bedarf geöffnet wird. Zusätzlich oder stattdessen kann die Ablagevorrichtung auch durch eine z.B. als Luftvorhang dienende Luftströmung geschützt werden.

Insbesondere wenn sich das Drehzentrum der Ablagevorrichtung in oder in der Nähe der Ebene der Kabinenwand befindet, kann zweckmäßig als Abdeckung statt fester Anbauten eine um die Mittelachse der Ablagevorrichtung drehbare Schalenkonstruktion in die Kabinenwand eingebaut werden, beispielsweise eine Zylinderhalbschale. Der Innenraum dieser nur nach einer Seite offenen Schalenkonstruktion ist je nach ihrer Drehstellung von außen oder von der Kabineninnenseite her zugänglich, wobei in beiden Fällen die Kabine nach außen hin abgeschlossen ist.

Vorteilhaft ist die hier beschriebene Wechselstation auch einfach erweiterbar, und zwar nicht nur durch Vergrößerung des Rondells, sondern insbesondere durch Anschluss zusätzlicher Magazine.

Anhand der Zeichnung werden verschiedene Ausführungsbeispiele einer erfindungsgemäßen Beschichtungsanlage näher erläutert. Es zeigen:
- Fign. 1A und 1B: perspektivische Ansichten einer Zerstäuberwechselstation in einer Beschichtungsanlage;
- Fign. 2A und 2B: perspektivische Ansichten eines drehbaren Zerstäuberrondells der Wechselstation;
- Fig. 3a bis d: einen Zerstäuberwechsel für zwei Roboter mit einem Rondell;
- Fig. 4a bis d: einen Zerstäuberwechsel für einen Roboter mit Rondell;
- Fig. 5a bis e: einen Zerstäuberwechsel mit der Schwenkeinheit aus Fig. 3 und einem Magazin;
- Fig. 6: eine Halteplatte des Rondells.

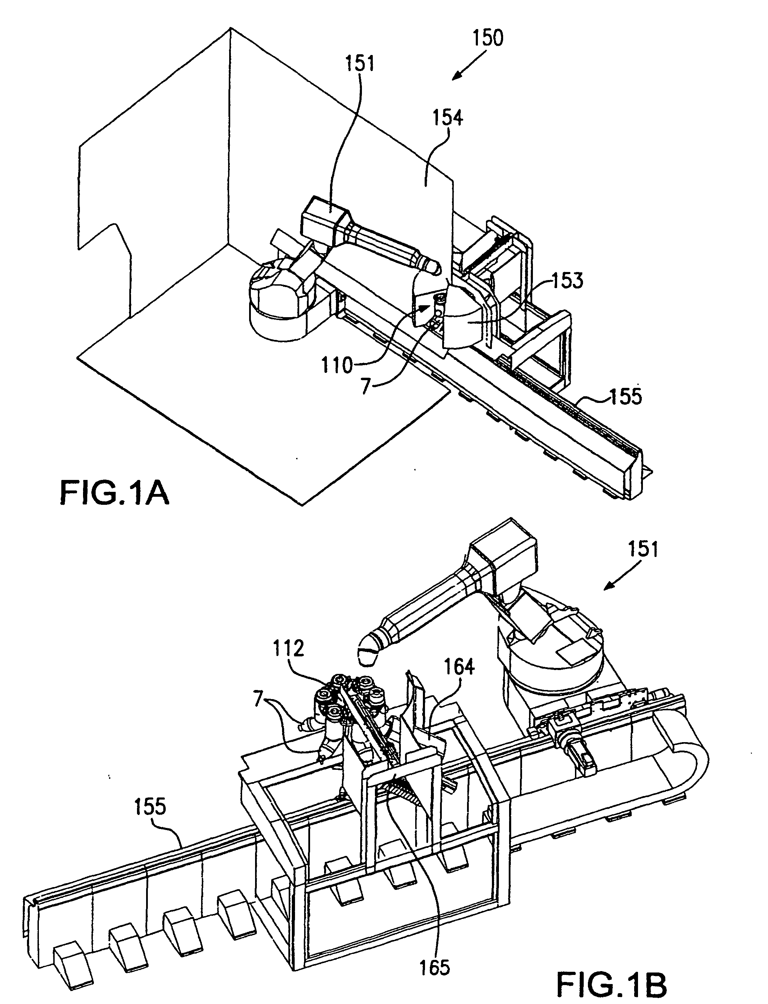

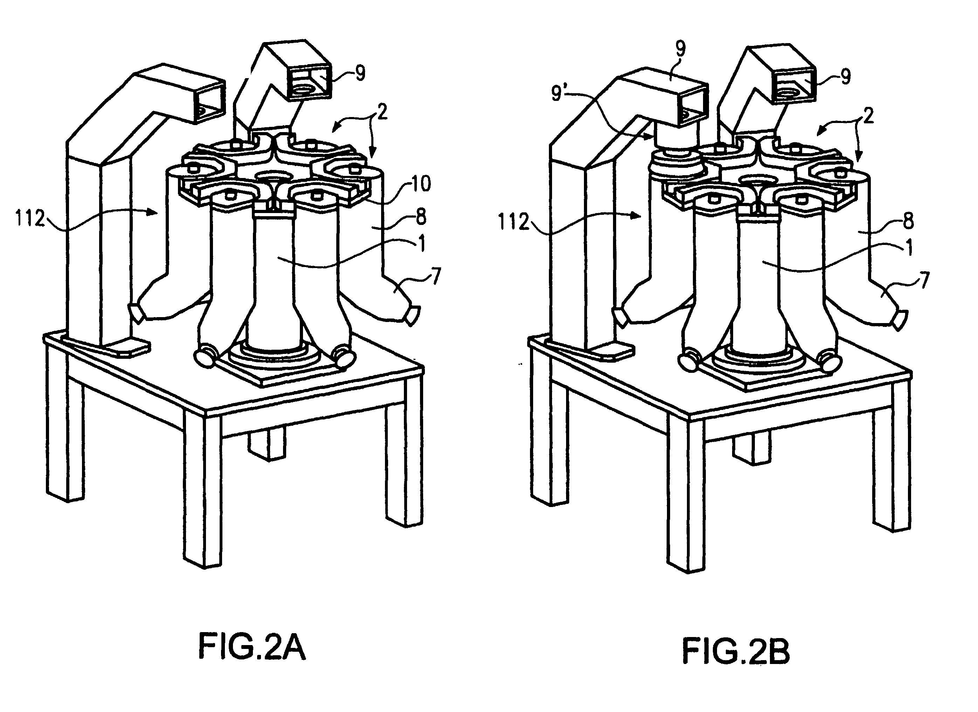

Fig 1A zeigt eine Beschichtungsanlage mit einer Zerstäuberwechselstation und einem Beschichtungsroboter 151. Der Beschichtungsroboter 151 kann an einer Entnahmestation 110 aus einem in der Wechselstation befindlichen Rondell 112 (Figur 2) mit Beschichtungsmaterial befüllte Zerstäuber 7 zur Beschichtung von Werkstücken entnehmen. Die Wechselstation 150 ist mit einer für den Roboter zu öffnenden und verschließbaren Abdeckung 153 versehen, durch die das Rondell 110 vor unerwünschter Verschmutzung geschützt wird. Der Roboter ist innerhalb einer mit Kabinenwänden 154 versehenen Kabine auf einer Linearführung 155 verfahrbar und kann somit von der Wechselstation 150 zu den (nicht näher gezeigten) zu beschichtenden Werkstücken gelangen.

Fig. 1B zeigt die Wechselstation aus einer anderen Blickrichtung ohne Abdeckung und Kabinenwände. Der Roboter 151 kann aus dem Rondell 110 die mit Farbbehältern versehenen Zerstäuber 7 zur Beschichtung eines Werkstücks entnehmen. Nachdem der Roboter einen Zerstäuber 7 mit den leeren Farbbehältern wieder in das Rondell 110 zurückgebracht hat, können der Farbbehälter und der Zerstäuber in einer Reinigungsstation 164 gereinigt werden, um sie anschließend in einer hier nicht gezeigten Befüllstation wieder neu mit Beschichtungsmaterial zu befüllen. Außerdem weist die Wechselstation 150 auch eine Handeingabestation 165 für die manuelle Eingabe und Entnahme von Zerstäubern auf.

Fig. 2A zeigt eine andere Ansicht einer Wechselstation 100 mit dem drehbaren Zerstäuberrondell 112. In der dargestellten Ausführungsform besitzt das Zerstäuberrondell 112 sechs Ablageplätze 2, an denen die Zerstäuber 7 gelagert werden können. Die Ablageplätze 2 sind in einer Halteplatte 10 integriert. Je nachdem wie viele Zertauber 7 von der Halteplatte 10 aufgenommen werden sollen, kann ihre Große variieren und somit die Anzahl der Ablageplätze 2. Je nach gewünschter Ausführungsform kann das Rondell also unterschiedliche Größen aufweisen. Unabhängig von der Größe der hier beschriebenen Wechselstation sind die Ablageplätze 2 und somit die Zerstäuber 7 kreisförmig um eine ihnen gemeinsame Mitte 1 angeordnet, wobei die Halteplatte 10 um die Mitte drehbar ist. Das Rondell 112 und ggf. die Wechselstation 150 können linear innerhalb der Kabine (Fig. 1A) verfahren werden, so dass die Zerstäuber 7 unter Zeiteinsparung dem nicht näher dargestellten Roboter (Fign. 1A und 1B) zugeführt werden können. Ferner weist die Wechselstation eine Spülund Befüllstation 9 auf, mit der der Farbbehälter 8 des Zerstäubers 7 gespült und mit neuer Farbe befüllt werden kann (siehe Fig. 2B Pfeil 9'). Die Wechselstation kann im Bereich der hier nicht dargestellten Kabinenwand (Fig. 1A) so angeordnet werden, dass sowohl die Roboter innerhalb der Kabine als auch das Bedienungspersonal von außerhalb der Kabine auf die in den Ablageplätzen 2 angeordneten Zerstäuber 7 zugreifen können. Ebenfalls nicht näher dargestellte Abdeckungen, maschinell gesteuerte Türen oder ein Luftvorhang können das Verunreinigen der im Rondell 1 gelagerten Zerstäuber 7 verhindern. Die kreisförmige Anordnung der Zerstäuber 7 in den Ablageplätzen 2 erleichtert es, gleichzeitig mit 2 Robotern auf die im Rondell 1 gelagerten Zerstäuber 7 zuzugreifen.

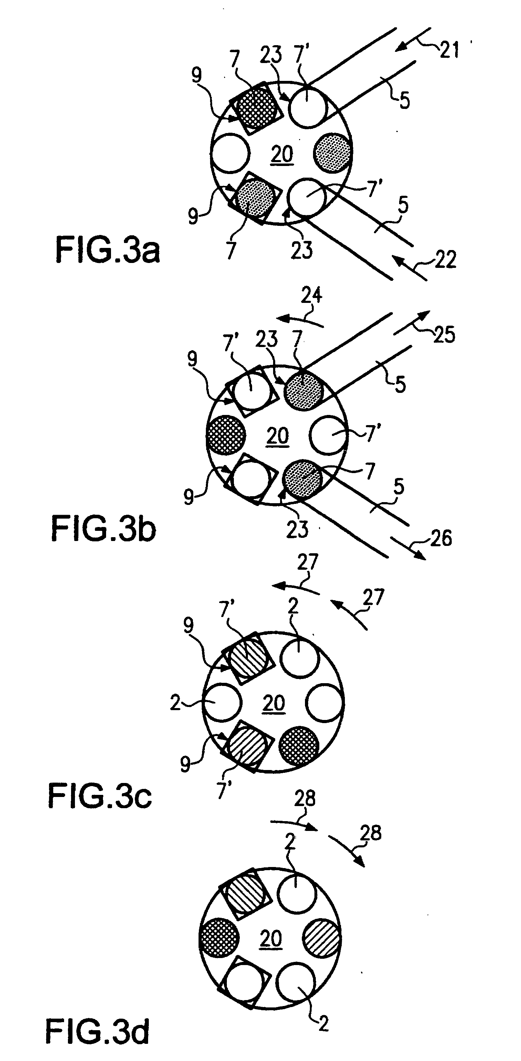

Die Fign. 3a bis 3d zeigen den Ablauf eines Wechsels der Zerstäuber 7 durch zwei Roboter 5 und einen das Rondell darstellenden drehbaren Rundtisch 20. In Fig. 3a führen die Roboter 5 dem Rundtisch 20 in Richtung der Pfeile 21 und 22 Zerstäuber 7' mit zuvor bei der Beschichtung entleerten Farbbehältern zu. Zur Aufnahme der leeren Zerstäuber 7' stehen die an zwei stationären Ablage- und Entnahme- oder Übergabestationen 23 befindlichen Rondellplätze bereit. In den Spül- und Befüllstationen 9 befinden sich Zerstäuber 7 mit gefüllten Farbbehältern.

Gemäß Fig. 3b wird der Rundtisch 20 in Richtung des Pfeiles 24 um einen Ablageplatz weiter gedreht, so dass die gefüllten Zerstäuber 7 zu den Übergabestationen 23 gelangen, um dort vom Roboter in Richtung der Pfeile 25 und 26 aufgenommen zu werden. Durch das Drehen des Rundtisches 20 in Richtung des Pfeiles 24 um einen Ablageplatz weiter gelangen die leeren Zerstäuber 7' zu den Spül- und Befüllstationen 9.

In Fig. 3c wird der Rundtisch 20 in Richtung der Pfeile 27 um zwei Ablageplätze weiter gedreht, so dass die zwei in Fig. 3b dargestellten leeren Zerstäuber 7' zu den Spül- und Befüllstationen 9 weiter befördert worden sind, um dort gespült und befüllt zu werden. Die durch die Aufnahme der beiden Zerstäuber 7 aus Fig. 3b frei gewordenen Ablageplätze befinden sich nun in der in Fig. 3c ersichtlichen Position.

Gemäß Fig. 3d wird der Rundtisch 20 um zwei Ablageplätze in Richtung der Pfeile 28 zurückgedreht, so dass die nicht mit einem Zerstäuber 7 besetzten Ablageplätze 2 in die Position an den Zerstäuber-, Ablage- und Entnahmestationen (Übergabestationen 23 in Fig. 3a) gebracht werden, in der sie leere vom Roboter 5 angelieferte Zerstäuber aufnehmen können.

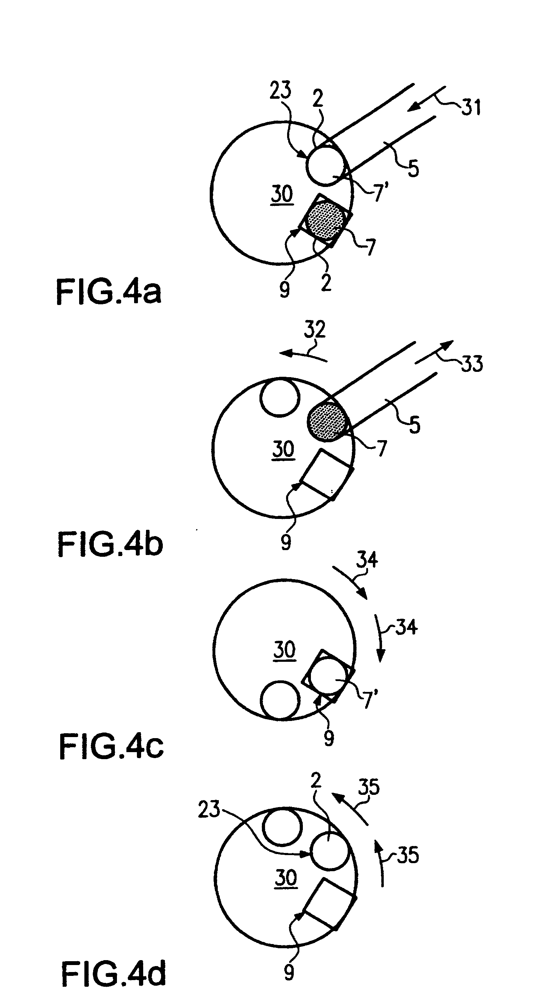

Fig. 4a zeigt den Ablauf eines Wechsels von Zerstäubern mit nur einem Roboter. Eine Schwenkeinheit 30 mit zwei Ablageplätze 2 ist an einer stationären Übergabestation 23 und einer stationären Spül- und Befüllstation 9 angeordnet. Der Roboter 5 legt aus Richtung des Pfeiles 31 kommend einen leeren Zerstäuber 7' auf der Schwenkeinheit 30 ab, wie in Fig. 4a gezeigt ist.

Gemäß Fig. 4b wird die Schwenkeinheit 30 in Richtung des Pfeiles 32 gedreht und ein zuvor (Fig. 4a) befüllter Zerstäuber 7 vom Roboter 5 aufgenommen und in Richtung des Pfeiles 33 abtransportiert.

In Fig. 4c ist die Schwenkeinheit 30 in die zu dem Pfeil 32 entgegengesetzte Richtung der Pfeile 34 um zwei Ablageplätze gedreht worden, so dass der in Fig. 4a vom Roboter 5 abgelegte leere Zerstäuber 7' in der Spül- und Befüllstation 9 gespült und befüllt werden kann.

Gemäß Fig. 4d wird die Schwenkeinheit 30 um zwei Ablageplätze in der dem Pfeil 32 entsprechenden Richtung der Pfeile 35 gedreht, so dass sich der durch Entnahme des vollen Zerstäubers 7 in Fig. 4b frei gewordene Ablageplatz 2 an der Übergabestation 23 zur Aufnahme eines entleerten Zerstäubers 7 befindet.

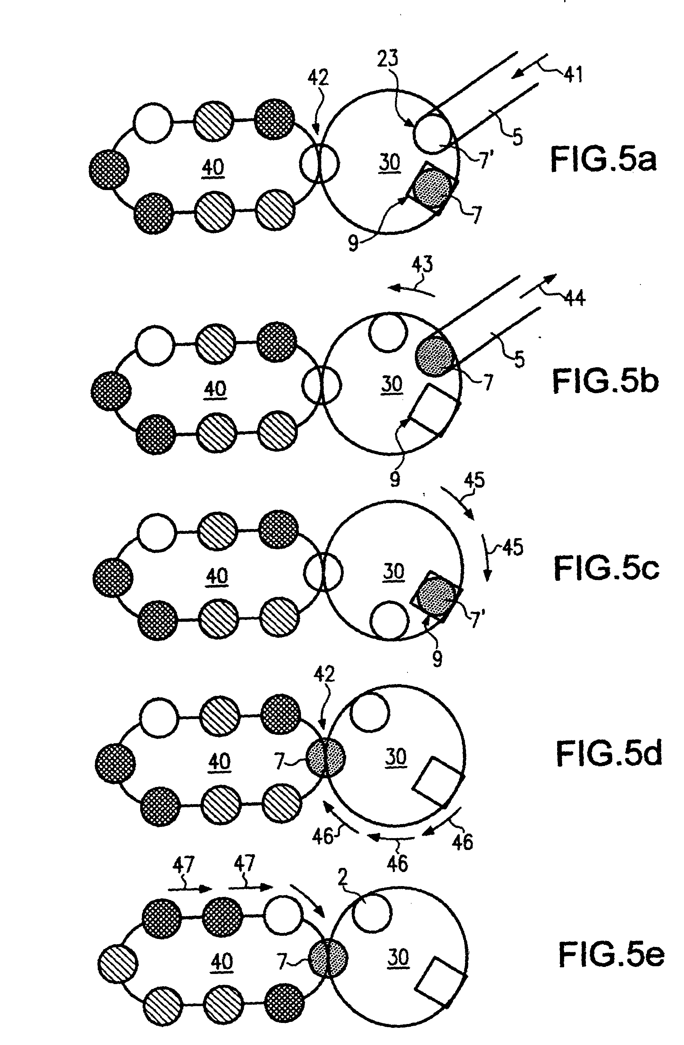

Fig. 5 zeigt eine Schwenkeinheit 30 gemäß Fig. 4, der ein drehbares Magazin 40 zugeordnet ist (für z.B. 4 bis 10 Ablageplätze). Der Roboter 5 bringt in Fig. 5a aus Richtung des Pfeiles 41 kommend einen leeren Zerstäuber 7' zur Übergabestation 23. In der Spül- und Befüllstation 9 befindet sich ein befüllter Zerstäuber 7. An der Verbindungsstelle zwischen der Schwenkeinheit 30 und dem Magazin 40 ist ein leerer Magazinplatz 42 vorhanden.

In Fig. 5b wurde die Schwenkeinheit 30 in Richtung des Pfeiles 43 gedreht, so dass der in Fig. 5a befüllte Zerstäuber 7 zur Aufnahme durch den Roboter 5 bereit steht, um vom Roboter 5 in Richtung des Pfeiles 44 abtransportiert zu werden.

Gemäß Fig. 5c wird die Schwenkeinheit 30 um zwei Ablageplätze in die Gegenrichtung der Pfeile 45 gedreht und der in Fig. 5a abgelegte leere Zerstäuber 7' in der Spül- und Befüllstation 9 gespült und befüllt. Anschließend wird die Schwenkeinheit 30 um drei Ablageplätze in Richtung der Pfeile 46 (Fig. 5d) weitergedreht und der in Fig. 5c befüllte Zerstäuber 7 auf die Position des leeren Magazinplatzes 42 gebracht. Daraufhin wird das Magazin 40 in Richtung der Pfeile 47 gedreht (Fig. 5e) und der Schwenkeinheit 30 ein anderer befüllter Zerstäuber 7 zugeführt. Im nächsten hier nicht dargestellten Schritt wird die Schwenkeinheit 30 so weit gedreht, bis der leere nicht mit einem Farbbehälter belegte Ablageplatz 2 auf die Übergabeposition 23 gelangt (Fig. 5a), um vom Roboter 5 wieder einen leeren Zerstäuber aufnehmen zu können.

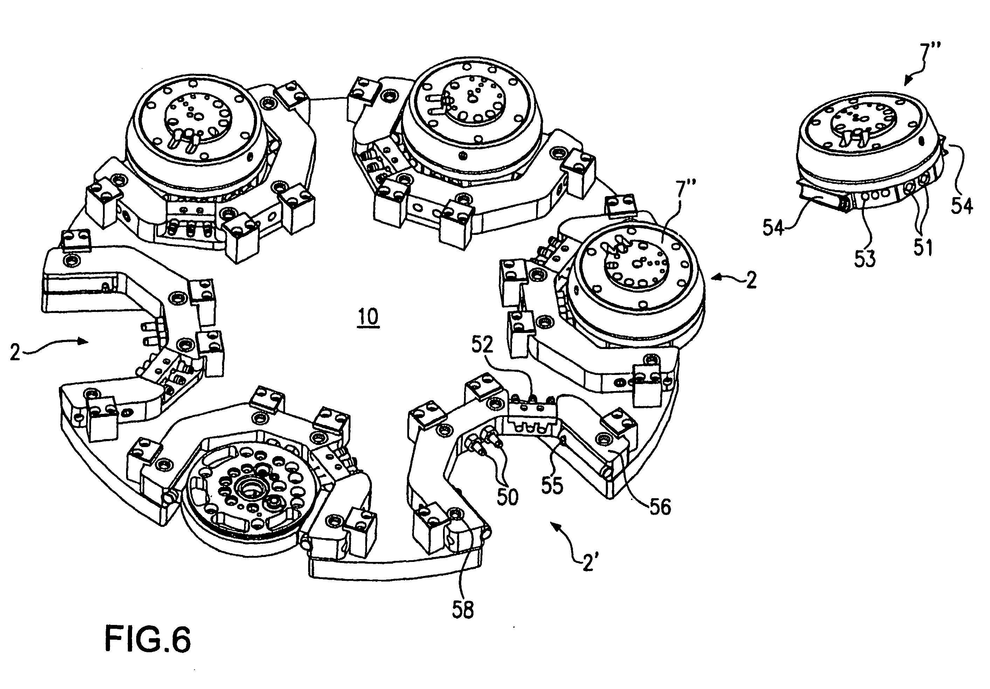

Fig. 6 zeigt eine Ausführungsform der Halteplatte 10 der in Fig. 2 dargestellten Wechselstation 100. Die Halteplatte 10 weist sechs die Ablageplätze 2 bildende gabelförmige Ausnehmungen auf, in die die Zerstäuber in Richtung des Pfeiles 2' mit ihren vom Roboter abtrennbaren Flanschteilen 7" eingebracht werden können. Eine vorzugsweise in allen drei Raumachsen am Ablageplatz 2 schwimmend gelagerte Werkzeugablage 56 weist Medienanschlüsse 50 für Luft, Spülmittel und andere Betriebsmedien, Abfrageeinrichtungen 52 zur Werkzeugidentifizierung und einen einstellbaren federbelasteten Bolzen 55 auf. Beim Einsetzen der Flanschteile 7" in die Ablage 2 werden an den Flanschteilen angeordnete Anschlussgegenstücke 51, z.B. Luftanschlüsse, die im abgekuppelten Zustand verschlossen sind, mit den Medienanschlüssen 50 verbunden, z.B. zur Luftversorgung für eine pneumatische Verriegelung. Die Anschlüsse 50 können auch zum Erden des eingesetzten Zerstäubers dienen. Die Abfrageeinrichtungen 52 der Ablageplätze 2 werden beim Einsetzen der Zerstäuber mit im Flanschteil 7'' auswechselbar angeordneten Einsätzen 53 für die Typenerkennung in Verbindung gebracht. Ferner weist das Flanschteil 7" eine Zentriereinrichtung 54 auf, die beim Einsetzen des Flanschteiles in den Ablageplatz 2 in einen einstellbaren federbelasteten Bolzen 55 eingreift. Das Zusammenspiel des Bolzens 55 mit der Zentriereinrichtung 54 dient der Lagefixierung des Flanschteiles 7'' in Normalrichtung der Halteplatte 10. Bei den bei 58 erkennbaren Elementen handelt es sich um eine beispielsweise durch Kugeldruckstücke gebildete Einrichtung zur Zentrierung der Ablagegabel in einer vorgeschriebenen Stellung in einem Prismeneinsatz.

Die hier beschriebene Wechselstation kann vorteilhaft auch als vollautomatische Wechseleinrichtung für die vollautomatische Kontrolle und Verbesserung der Beschichtungsqualität während des Lackierbetriebes unter Verwendung geeigneter Qualitätsmesssensoren dienen, deren Messergebnisse zur sofortigen, vorzugsweise ebenfalls automatischen Korrektur der Beschichtungsparameter in derselben Lackierstation verwendet werden können. Hierbei kann (insbesondere bei Lackieranlagen mit relativ langen Taktzeiten) derselbe Roboter sowohl zum Lackieren mit ggf. unterschiedlichen Applikationswerkzeugen wie beispielsweise Luft- und Rotationszerstäubern als auch zur unmittelbar anschließenden Ergebnismessung und anschließenden Lackierung mit ggf. korrigierten Prozessparametern (Farbmenge, Hochspannung, Luft, Drehzahl usw.) verwendet werden. Beispielsweise kann sich dann der folgende vollautomatische Betriebsablauf im geschlossenen Regelkreis ergeben:
1. 'Beschichtung eines oder mehrere Werkstücke.
2. Auswechseln des im Schritt 1 verwendeten Zerstäubers gegen einen zur Messung eines typischen Qualitätsparameters wie z.B. Farbton, Farbverlauf und/oder Schichtdicke geeigneten Sensor, der in der oben beschriebenen Wechselstation zur Verfügung steht.
3. Messen der Beschichtungsqualität mit dem Lackierroboter.
4. Selbsttätige Zuordnung (z.B. gemäß DE 100 36 741) von im Schritt 3 erkannten Beschichtungsfehlern und Verarbeitung in einem Prozessrechner- und Regelsystem (z.B. mit Fuzzy-Logik).
5. Auswechseln des Messsensors gegen einen Zerstäuber und Nachbearbeitung des zuvor beschichteten Werkstücks und/oder Beschichtung der nachfolgenden Werkstücke mit gemäß Schritt 4 errechneten Prozessparametern.

## Patentansprüche

1. Beschichtungsanlage für die Serienbeschichtung von Werkstücken mit lösbar und auswechselbar an mindestens einer Beschichtungsmaschine (151) montierbaren Werkzeugen, die von der Beschichtungsmaschine (151) in einer Sprühkabine an von ihr anfahrbaren Ablageplätzen (2) einer Werkzeugwechselstation (150) abgelegt und abgeholt werden, die mindestens einen Zerstäuber (7) enthält,
**dadurch gekennzeichnet, dass** die Ablageplätze (2) um eine ihnen gemeinsame Mitte (1) einer bewegbaren Halterung (112) verteilt angeordnet sind,
dass der Zerstäuber (7) mit einem Farbbehälter versehen ist,
und dass die Ablageplätze (2) durch Bewegen ihrer Halterung (112) zwischen einer Übergabestation (23) für die Beschichtwngsmaschine (151) zum Entnehmen oder Einsetzen des Zerstäubers (7) und einer Spül- und Befüllstation (9) für den Zerstäuber (7) bewegbar sind.

2. Beschichtungsanlage nach Anspruch 1 oder dessen Oberbegriff, **dadurch gekennzeichnet, daß** die Wechselstation (150) im Bereich der Kabinenwand (154) derart angeordnet ist, dass die Ablageplätze (2) sowohl für die Beschichtungsmaschine (151) in der Kabine als auch von außerhalb der Kabine zugänglich sind.

3. Beschichtungsanlage nach Anspruch 1 oder 2, **dadurch gekennzeichnet, dass** die Ablageplätze (2) rondellartig insbesondere kreisförmig um eine ihnen gemeinsame Mitte (1) angeordnet sind.

4. Beschichtungsanlage nach einem der vorangehenden Ansprüche, **dadurch gekennzeichnet, dass** die Ablageplätze (2) an einer um eine Mittelachse (1) der Wechselstation (150) drehbaren oder schwenkbaren Halterung (112) angeordnet sind.

5. Beschichtungsanlage nach einem der vorangehenden Ansprüche, **dadurch gekennzeichnet, dass** die Halterung (112) mit den Ablageplätzen (2) linear innerhalb der Kabine verfahrbar ist.

6. Beschichtungsanlage nach einem der vorangehenden Ansprüche, **dadurch gekennzeichnet, dass** der rondellartigen Halterung (112) ein gesondertes bewegbares Magazin (40) für zusätzliche Ablageplätze zugeordnet ist.

7. Beschichtungsanlage nach einem der vorangehenden Ansprüche, **dadurch gekennzeichnet, dass** in oder an der Wechselstation (150) eine Werkzeugidentifizierungseinrichtung (52) angeordnet ist.

8. Beschichtungsanlage nach einem der vorangehenden Ansprüche, **dadurch gekennzeichnet, dass** die gemeinsame Mitte (1) der Ablageplätze (2) in oder in der Nähe der Ebene der Kabinenwand (154) liegt.

9. Beschichtungsanlage nach Anspruch 8, **dadurch gekennzeichnet, dass** eine Abdeckanordnung (153) für die Ablageplätze (2) um eine in oder in der Nähe der Ebene der Kabinenwand (154) liegende Mittelachse der Wechselstation (150) drehbar ist.

10. Beschichtungsanlage (150,250) nach einem der vorhergehenden Ansprüche, **dadurch gekennzeichnet, dass** die Ablageplätze (2) durch eine selbsttätig verschließbare Abdeckung (153) geschützt sind, die zur Entnahme und zum Einsetzen eines Werkzeugs selbsttätig geöffnet wird.

11. Beschichtungsanlage nach einem der vorhergehenden Ansprüche, **dadurch gekennzeichnet, dass** die Wechselstation (150) mindestens ein Messgerät zur Kontrolle der Beschichtungsqualität enthält.

12. Verfahren zur Serienbeschichtung von Werkstücken mit lösbar und auswechselbar an mindestens einer Beschichtungsmaschine (151) montierten Werkzeugen, die von der Beschichtungsmaschine in einer Sprühkabine an von ihr angefahrenen Ablageplätzen (2) einer Werkzeugwechselstation (150) abgelegt und abgeholt werden,
**dadurch gekennzeichnet, dass** die Ablageplätze (2) innerhalb der Wechselstation (150) zu einer Übergabestation (23) für die Beschichtungsmaschine (151) bewegt und nach der Entnahme oder dem Einsetzen eines Werkzeugs (7) durch die Maschine (151) wieder von der Übergabestation (23) wegbewegt werden,
und dass die Ablageplätze (2) durch Bewegen ihrer Halterung (112) zwischen der Übergabestation (23) und einer Spül- und Befüllstation (9) für Farbbehälter enthaltende Zerstäuber (7) bewegt werden.

13. Verfahren nach Anspruch 12 oder dessen Oberbegriff, bei dem dass die Ablageplätze (2) innerhalb der Wechselstation (150) zu einer Übergabestation (23) für die Beschichtungsmaschine (151) bewegt und nach der Entnahme oder dem Einsetzen eines Werkzeugs (7) durch die Maschine (151) wieder von der Übergabestation (23) wegbewegt werden, **dadurch gekennzeichnet, dass** nach dem Beschichten eines Werkstücks das dabei verwendete Applikationswerkzeug (7) in der Wechselstation (150) abgelegt und der Wechselstation ein Messgerät zur Kontrolle der Beschichtungsqualität entnommen wird.

14. Verfahren nach Anspruch 13, **dadurch gekennzeichnet, dass** mit dem der Wechselstation (150) entnommenen Messgerät Farbton, Verlauf, Schichtdicke und/oder ein anderer Qualitätsparameter der zuvor erzeugten Beschichtung gemessen wird, dass die Messergebnisse mit gespeicherten Sollwerte verglichen und den Abweichungen entsprechende Korrekturwerte für die für die Abweichungen verantwortlichen Beschichtungsprozessparameter errechnet werden
und dass mit einem anschließend der Wechselstation (150) entnommenen Applikationswerkzeug (7) das zuvor beschichtete Werkstück nachbearbeitet und/oder nachfolgende Werkstücke unter Verwendung der korrigierten Beschichtungsprozessparameter beschichtet werden.

15. Verfahren nach Anspruch 13 oder 14, **dadurch gekennzeichnet, dass** das Applikationswerkzeug (7) und das Messgerät von ein- und demselben Roboter (151) verwendet wird.

## Claims

1. Coating installation for the series coating of workpieces with tools which can be detachably and replaceably mounted on at least one coating machine (151) and are deposited and collected by the coating machine (151) in a spray booth at support locations (2) of a tool change station to which it can move and which contains at least one atomiser (7), **characterised in that** the support locations (2) are distributed about the centre (1) which is common to all of them of a movable mounting (112), that the atomiser (7) is provided with a pain container, and that the support locations (2) are movable movement of their mounting (112) between a transfer station (23) for the coating machine (151) for removal or insertion of the atomiser (7) and a rinsing and filling station (9) for the atomiser (7).

2. Coating installation as claimed in Claim 1 or the preamble thereto, **characterised in that** the change station (150) is disposed in the region of the booth wall (154) in such a way that the support locations (2) are accessible for the coating machine (151) both inside the booth and outside the booth.

3. Coating installation as claimed in Claim 1 or 2, **characterised in that** the support locations (2) are disposed as a circular unit and in particular in a circle about a centre (1) which is common to all of them.

4. Coating installation as claimed in any one of the preceding claims, **characterised in that** the support locations (2) are disposed on a mounting (112) which can rotate or swivel about a central axis (1) of the change station (150).

5. Coating installation as claimed in any one of the preceding claims, **characterised in that** the mounting (112) with the support locations (2) is movable in a linear manner within the booth.

6. Coating installation as claimed in any one of the preceding claims, **characterised in that** the mounting (112) in the form of a circular unit has associated with it a separate movable magazine (40) for additional support locations.

7. Coating installation as claimed in any one of the preceding claims, **characterised in that** a tool identification means (52) is disposed in or on the change station (150).

8. Coating installation as claimed in any one of the preceding claims, **characterised in that** the common centre (1) of the support locations (2) lies in or near the plane of the booth wall (154).

9. Coating installation as claimed in Claim 8, **characterised in that** a cover arrangement (153) for the support locations (2) is rotatable about a central axis of the change station (150) lying in or near the plane of the booth wall (154).

10. Coating installation (150, 250) as claimed in any one of the preceding claims, **characterised in that** the support locations (2) are protected by an automatically closable cover (153) which is opened automatically for the removal and insertion of a tool.

11. Coating installation as claimed in any one of the preceding claims, **characterised in that** the change station (150) contains at least one measuring device for controlling the coating quality.

12. Method of series coating of workpieces with tool which are mounted detachably and replaceably on at least one coating machine (151) and are deposited and collected by the coating machine in a spray booth at support locations (2) of a tool change station (150) to which it can move, **characterised in that** the support locations (2) are moved within the change station (150) to a transfer station (23) for the coating machine (151) and are moved away from the transfer station (23) again by the machine (151) after the removal or the insertion of a tool (7), and that the support locations are moved by movement of their mounting (112) between the transfer station (23) and a rinsing and filling station (9) for atomisers (7) containing paint containers.

13. Method as claimed in Claim 12 or the preamble thereto, in which the support locations (2) are moved within the change station (150) to a transfer station (23) for the coating machine (151) and are moved away from the transfer station (23) again by the machine (151) after the removal or the insertion of a tool (7), **characterised in that** after the coating of a workpiece the application tool (7) used therefore is deposited in the change station (150) and a measuring device for controlling the coating quality is removed from the change station.

14. Method as claimed in Claim 13, **characterised in that** the paint colour tone, progress, coating thickness and/or another quality parameter of the previously produced coating is measured by the measuring device removed from the change station (150), that the measurement results are compared with stored desired values and correction values corresponding to the deviations are calculated for the coating process parameters responsible for the deviations, and that using the application tool (7) which is then removed from the change station (150) the previously coated workpiece is further processed and/or subsequent workpieces are coated using the corrected coating process parameters.

15. Method as claimed in Claim 13 or 14, **characterised in that** the application tool (7) and the measuring device of one and the same robot (151) are used.

## Revendications

1. Installation de revêtement pour le revêtement en série de pièces, comportant des outils pouvant être montés de manière séparable et échangeable sur au moins une machine de revêtement (151), lesquels sont repris et déposés par la machine de revêtement (151) dans une cabine de pulvérisation en des emplacements de rangement (2), pouvant être approchés par celle-ci, d'un poste d'échange d'outil (150) qui contient au moins un pulvérisateur (7), **caractérisée en ce que** les emplacements de rangement (2) sont répartis autour d'un centre (1) commun d'un support (112) déplaçable, **en ce que** le pulvérisateur (7). est pourvu d'un récipient à peinture, et **en ce que** les emplacements de rangement (2) sont déplaçables par déplacement de leur support (112) entre un poste de transfert (23) pour. la machine de revêtement (151), destiné à prélever ou à mettre en place le pulvérisateur (7), et un poste de lavage et de remplissage (9) du pulvérisateur (7).

2. Installation de revêtement selon la revendication 1 ou son préambule, **caractérisée en ce que** le poste d'échange (150) est disposé dans la zone de -la paroi (154) de la cabine de manière que les emplacements de rangement (2) soient accessibles à la machine de revêtement (151) aussi bien dans la cabine qu'à l'extérieur de celle-ci.

3. Installation de revêtement selon la revendication 1 ou 2, **caractérisée en ce que** les emplacements de rangement (2) sont disposés en rondelle, en particulier en forme de cercle autour de leur centre (1) commun.

4. Installation de revêtement selon l'une des revendications précédentes, **caractérisée en ce que** les emplacements de rangement (2) sont disposés sur un support (112) qui peut tourner ou pivoter autour d'un axe central (1) du poste d'échange (150).

5. Installation de revêtement selon l'une des revendications précédentes, **caractérisée en ce que** le support (112) avec les emplacements de rangement (2) est déplaçable linéairement à l'intérieur de la cabine.

6. Installation de revêtement selon l'une des revendications précédentes, **caractérisée en ce qu'**au support (112) de type rondelle est associé un magasin (40) déplaçable et séparé pour des emplacements de rangement supplémentaires.

7. Installation de revêtement selon l'une des revendications précédentes, **caractérisée en ce que** dans ou sur le poste d'échange (150) est disposé un dispositif d'identification d'outil (52).

8. Installation de revêtement selon l'une des revendications précédentes, **caractérisée en ce que** le centre commun (1) des emplacements de rangement (2) se situe dans ou à proximité du plan de la paroi (154) de la cabine.

9. Installation de revêtement selon la revendication 8, **caractérisée en ce qu'**un dispositif de recouvrement (153) des emplacements de rangement (2) peut tourner autour d'un axe médian, situé dans ou à proximité du plan de la paroi (154) de la cabine, du poste d'échange (150).

10. Installation de revêtement (150, 250) selon l'une des revendications précédentes, **caractérisée en ce que** les emplacements de rangement (2) sont protégés par un capot (153) pouvant se fermer automatiquement qui est ouvert automatiquement pour le prélèvement ou la mise en place d'un outil.

11. Installation de revêtement selon l'une des revendications précédentes, **caractérisée en ce que** le poste d'échange (150) contient au moins un appareil de mesure pour le contrôle de la qualité du revêtement.

12. Procédé de revêtement en série de pièces comportant des outils pouvant être montés de manière séparable et échangeable sur au moins une machine de revêtement (151), lesquels sont repris et déposés par la machine de revêtement (151) dans une cabine de pulvérisation en des emplacements de rangement (2), pouvant être approchés par celle-ci, d'un poste d'échange d'outil (150), **caractérisé en ce que** les emplacements de rangement (2) à l'intérieur du poste d'échange (150) sont déplacés vers un poste de transfert (23) pour la machine de revêtement (151) et, après prélèvement ou mise en place d'un outil (7) par la machine (151), ils sont à nouveau déplacés depuis le poste de transfert (23), et **en ce que** les emplacements de rangement (2) sont déplacés par déplacement de leur support (112) entre 'le poste de transfert (23) et un poste de lavage et de remplissage (9) des pulvérisateurs (7) contenant des récipients à peinture.

13. Procédé selon la revendication 12 et son préambule dans lequel les emplacements de rangement (2) sont déplacés à l'intérieur du poste d'échange (150) vers un poste de transfert (23) pour la machine de revêtement (151), et après prélèvement ou mise en place d'un outil (7) par la machine (151), ils sont à nouveau déplacés depuis le poste de transfert (23), **caractérisé en ce qu'**après le revêtement d'une pièce l'outil d'application (7) utilisé ici est rangé dans le poste d'échange (150) et un appareil de mesure pour le contrôle de la qualité du revêtement est prélevé du poste d'échange.

14. Procédé selon la revendication 13, **caractérisé en ce qu'**au moyen de l'appareil de mesure prélevé du poste d'échange (150), on mesure la teinte de la peinture, l'allure, l'épaisseur de la couche et/ou un autre paramètre de qualité du revêtement réalisé auparavant, **en ce que** les résultats de la mesure sont comparés à des valeurs de consigne mémorisés et des valeurs de correction correspondant aux écarts sont calculées pour les paramètres du processus de revêtement responsables des écarts, et **en ce qu'**avec un outil d'application (7), prélevé ensuite du poste d'échange (150), la pièce revêtue auparavant est rectifiée et/ ou les pièces suivantes sont revêtues avec utilisation des paramètres corrigés du processus de revêtement.

15. Procédé selon la revendication 13 ou 14, **caractérisé en ce que** l'outil d'application (7) et l'appareil de mesure sont utilisés par un seul et même robot (151).
